# EUROPEAN PATENT APPLICATION

(11) **EP 4 332 178 A1**
(43) Date of publication of application: **06.03.2024**
(21) Application number: 22795777.6
(22) Date of filing: 26.04.2022
(51) Int. Cl.: C09D 5/00, C09D 183/04, C09D 7/62, C09D 7/63

(54) **COATING COMPOSITION FOR FORMING HARD COATING LAYER, METHOD FOR PRODUCING SAME, SUBSTRATE WITH HARD COATING LAYER, AND METHOD FOR PRODUCING SAME**

(30) Priority: 28.04.2021 JP 2021076539
(71) Applicant: JGC Catalysts and Chemicals Ltd., Kawasaki-shi, Kanagawa 212-0013 (JP)
(72) Inventor: SHIMIZU Takehiro, Kitakyushu-shi, Fukuoka 808-0027 (JP); IKEMATSU Takafumi, Kitakyushu-shi, Fukuoka 808-0027 (JP); MURAGUCHI Ryo, Kitakyushu-shi, Fukuoka 808-0027 (JP)
(74) Representative: Dehns
(86) International application number: PCT/JP2022/018855
(87) International publication number: WO 2022/230864

(57) **Abstract**

To provide, for example, a paint composition for forming a hard coat layer capable of shortening the heating time required to form a hard coat layer by curing a coating film without impairing the quality of the resulting hard coat layer.

A paint composition for forming a hard coat layer including surface-coated inorganic oxide fine particles that are inorganic oxide fine particles having been subjected to surface coating treatment with a quaternary alkoxysilane; hydrolysates of an organosilicon compound having an epoxy group and/or condensates of the hydrolysates; 1,2,3,4-butanetetracarboxylic acid; and a curing agent, the hydrolysates and/or condensates of the hydrolysates having a number-average molecular weight of 80 to 500, the composition having a content amount of 1,2,3,4-butanetetracarboxylic acid of 8 to 25 parts by mass with respect to 100 parts by mass of the surface-coated inorganic oxide fine particles.

## Description

### Technical Field

The present invention relates to a composition for forming a hard coat layer and a method for producing the same, and more specifically relates to a composition for forming a hard coat layer to be formed on a surface of a transparent plastic substrate such as an optical lens as a typical example and a method for producing the same, and a substrate with a hard coat layer and a method for producing the same.

### Background Art

These days, as a material of an optical lens, particularly a spectacle lens, a plastic substrate is often used instead of an inorganic glass substrate. This is because not only does the plastic substrate have excellent characteristics in terms of, for example, lightweight properties, impact resistance, processability, and dyeability but also the material has been improved and developed as a second generation plastic lens to achieve, for example, further weight reduction and refractive index increase. However, these plastic substrates have a disadvantage that they are more easily damaged than inorganic glass substrates.

Thus, in order to avoid this disadvantage, a silicone-based curable coating film, that is, a hard coat layer is usually provided on a surface of an optical lens using a plastic substrate. Further, in the case of using a plastic lens substrate having a high refractive index, in order to avoid light interference (appearing as interference fringes) occurring between the lens and a hard coat layer, treatment is performed in which metal oxide fine particles are incorporated in the hard coat layer to adjust the refractive index of the hard coat layer to the refractive index of the lens substrate.

For example, Patent Literature 1 discloses the use of, as the metal oxide fine particles, composite oxide fine particles including titanium oxide, zirconium oxide, and antimony pentoxide.

Patent Literature 2 proposes to use, as the metal oxide fine particles, composite oxide fine particles including titanium, silicon, and zirconium and/or aluminum.

Patent Literature 3 proposes to use, as the metal oxide particles, composite oxide fine particles in each of which a surface of a composite solid solution oxide (nuclear particle) made of a composite oxide of titanium and tin and having a rutile structure is coated with a composite oxide (coating layer) of a silicon oxide and an oxide of zirconium and/or aluminum.

Further, Patent Literature 4 proposes to use a metal oxide fine particle including a titanium oxide-containing nuclear particle and a coating layer made of an antimony oxide.

### Citation List

### Patent Literature

Patent Literature 1: JP H05-264806 A
Patent Literature 2: JP 3203142 B2
Patent Literature 3: JP 2000-204301 A
Patent Literature 4: JP 2002-363442 A

### Summary of Invention

### Technical Problem

In the conventional technology, heating treatment for thermally curing a paint for forming a hard coat layer applied to a substrate to form a hard coat layer takes about 2 hours, and it is desired to shorten this time without impairing the quality of the resulting hard coat layer (for example, adhesion to the substrate).

Thus, an object of the present invention is to provide, for example, a paint composition for forming a hard coat layer capable of forming a hard coat layer while shortening the heating time required to form a hard coat layer by curing a coating film without impairing the quality of the hard coat layer (for example, adhesion to a substrate, more specifically, at least hardness and adhesion to a substrate) and a method for producing a paint composition for forming a hard coat layer capable of shortening the heating time required to form a hard coat layer by curing a coating film without impairing the quality of the resulting hard coat layer (for example, adhesion to a substrate, more specifically, at least hardness and adhesion to a substrate).

### Solution to Problem

The present invention relates to, for example, [1] to [12] below.
[1] A paint composition for forming a hard coat layer, the paint composition including:
   surface-coated inorganic oxide fine particles (α₀) that are inorganic oxide fine particles (β₀) being selected from the group consisting of aluminum oxide-based fine particles, silicon oxide-based fine particles, titanium oxide-based fine particles (β), and zirconium oxide-based fine particles and having been subjected to surface coating treatment with a quaternary alkoxysilane;
   hydrolysates of an organosilicon compound having an epoxy group and/or condensates of the hydrolysates;
   1,2,3,4-butanetetracarboxylic acid; and
   a curing agent,
   the hydrolysates and/or condensates of the hydrolysates having a number-average molecular weight of 80 to 500, and
   the composition having a content amount of 1,2,3,4-butanetetracarboxylic acid of 8 to 25 parts by mass with respect to 100 parts by mass of the surface-coated inorganic oxide fine particles (α₀).
[2] The paint composition for forming a hard coat layer according to [1], wherein the inorganic oxide fine particles (β₀) and the surface-coated inorganic oxide fine particles (α₀) are titanium oxide-based fine particles (β) and surface-coated titanium oxide-based fine particles (α), respectively.
[3] The paint composition for forming a hard coat layer according to [2], wherein the titanium oxide-based fine particles (β) contain 60% by mass or more of Ti in terms of mass of titanium oxide, and further contain at least one metal element selected from the group consisting of Al, Zr, Sb, Zn, Ni, Fe, Ba, Mg, Sn, Si, and V.
[4] The paint composition for forming a hard coat layer according to [2] or [3], wherein the titanium oxide-based fine particles (β) are core-shell type fine particles including titanium oxide-based fine particles as core particles.
[5] The paint composition for forming a hard coat layer according to any one of [1] to [4], wherein the surface-coated inorganic oxide fine particles (α₀) are further surface-modified with 1,2,3,4-butanetetracarboxylic acid to form modified inorganic oxide fine particles (A₀).
[6] A method for producing a paint composition for forming a hard coat layer, the method including:
   (1) a step of adding 1,2,3,4-butanetetracarboxylic acid to a dispersion of surface-coated inorganic oxide fine particles (α₀) that are inorganic oxide fine particles (β₀) being selected from the group consisting of aluminum oxide-based fine particles, silicon oxide-based fine particles, titanium oxide-based fine particles (β), and zirconium oxide-based fine particles and having been subjected to surface coating treatment with a quaternary alkoxysilane to obtain a solution A containing modified inorganic oxide fine particles (A₀) having been further subjected to surface modification;
   (2) a step of hydrolyzing an organosilicon compound having an epoxy group at 5 to 15°C to obtain a solution B containing hydrolysates; and
   (3) a step of mixing the solution A, the solution B, a curing agent, and optionally an additive,
   wherein the addition amount of 1,2,3,4-butanetetracarboxylic acid is 8 to 25 parts by mass with respect to 100 parts by mass of the surface-coated inorganic oxide fine particles (α).
[7] The method for producing a paint composition for forming a hard coat layer according to [6], wherein the inorganic oxide fine particles (β₀), the surface-coated inorganic oxide fine particles (α₀), and the modified inorganic oxide fine particles (A₀) are the titanium oxide-based fine particles (β), surface-coated titanium oxide-based fine particles (α), and modified titanium oxide-based fine particles (A), respectively.
[8] The method for producing a paint composition for forming a hard coat layer according to [7], wherein the titanium oxide-based fine particles (β) contain 60% by mass or more of Ti in terms of mass of titanium oxide, and further contain at least one metal element selected from the group consisting of Al, Zr, Sb, Zn, Ni, Fe, Ba, Mg, Sn, Si, and V.
[9] The method for producing a paint composition for forming a hard coat layer according to [7] or [8], wherein the titanium oxide-based fine particles (β) are core-shell type fine particles including titanium oxide-based fine particles as core particles.
[10] A paint composition for forming a hard coat layer produced by the method according to any one of [6] to [9].
[11] A method for producing a substrate with a hard coat layer, the method including:
   (I) a step of preparing the paint composition for forming a hard coat layer according to any one of [1] to [5] and [10] or producing a paint composition for forming a hard coat layer by the method according to any one of [6] to [9];
   (II) a step of applying the paint composition for forming a hard coat layer to a surface of a plastic substrate to form a coating film; and
   (III) a step of thermally curing the coating film.
[12] A substrate with a hard coat layer, the substrate including: a plastic substrate; and a hard coat layer formed on a surface of the plastic substrate, wherein the hard coat layer is a thermally cured product of the paint composition for forming a hard coat layer according to any one of [1] to [5] and [10].

### Advantageous Effects of Invention

By the paint composition for forming a hard coat layer of the present invention, a hard coat layer can be formed while the heating time required to form a hard coat layer by curing a coating film is shortened without impairing the quality of the hard coat layer (for example, adhesion to a substrate, more specifically, at least hardness and adhesion to a substrate).

By the method for producing a composition for forming a hard coat layer of the present invention, a composition for forming a hard coat layer capable of shortening the heating time required to form a hard coat layer by curing a coating film without impairing the quality of the resulting hard coat layer (for example, adhesion to a substrate, more specifically, at least hardness and adhesion to a substrate) is obtained.

### Description of Embodiments

Hereinbelow, a composition for forming a hard coat layer and the like of the present invention is described in more detail.

### [Composition for forming hard coat layer]

The paint composition for forming a hard coat layer of the present invention includes:
surface-coated inorganic oxide fine particles (α₀) (for example, surface-coated titanium oxide-based fine particles (α)) that are inorganic oxide fine particles (β₀) being selected from the group consisting of aluminum oxide-based fine particles, silicon oxide-based fine particles, titanium oxide-based fine particles (β), and zirconium oxide-based fine particles and having been subjected to surface coating treatment with a quaternary alkoxysilane;
hydrolysates of an organosilicon compound having an epoxy group and/or condensates of the hydrolysates;
1,2,3,4-butanetetracarboxylic acid;
a curing agent;
optionally an additive; and
optionally a solvent,
the hydrolysates and/or condensates of the hydrolysates having a number-average molecular weight of 80 to 500, and
the composition having a content amount of 1,2,3,4-butanetetracarboxylic acid of 8 to 25 parts by mass with respect to 100 parts by mass of the surface-coated inorganic oxide fine particles (α₀).

Details of each component are described in the following description of "Method for producing paint composition for forming hard coat layer".

### [Method for producing composition for forming hard coat layer]

The method for producing a paint composition for forming a hard coat layer of the present invention includes:
(1) a step of adding 1,2,3,4-butanetetracarboxylic acid to a dispersion of surface-coated inorganic oxide fine particles (α₀) (for example, surface-coated titanium oxide-based fine particles (α)) that are inorganic oxide fine particles (β₀) being selected from the group consisting of aluminum oxide-based fine particles, silicon oxide-based fine particles, titanium oxide-based fine particles (β), and zirconium oxide-based fine particles and having been subjected to surface coating treatment with a quaternary alkoxysilane to obtain a solution A containing modified inorganic oxide fine particles (A₀) (for example, modified titanium oxide-based fine particles (A)) having been further subjected to surface modification;
(2) a step of hydrolyzing an organosilicon compound having an epoxy group at 5 to 15°C to obtain a solution B containing hydrolysates; and
(3) a step of mixing the solution A, the solution B, a curing agent, and optionally an additive,
wherein the addition amount of 1,2,3,4-butanetetracarboxylic acid is 8 to 25 parts by mass with respect to 100 parts by mass of the surface-coated inorganic oxide fine particles (α₀).

### <Step (1)>

Step (1) is a step of adding 1,2,3,4-butanetetracarboxylic acid to a dispersion of surface-coated inorganic oxide fine particles (α₀) (for example, the surface-coated titanium oxide-based fine particles (α)) to obtain a solution A containing modified inorganic oxide fine particles (A₀) (for example, modified titanium oxide-based fine particles (A)). In the present invention, the term "solution" does not necessarily mean that all the components in the liquid are dissolved.

Step (1) will now be described in detail mainly using, as an example, a case where the inorganic oxide fine particles (β₀) are the titanium oxide-based fine particles (β).

### (A) Modified titanium oxide-based fine particles:

The modified titanium oxide-based fine particles (A) are obtained by surface-modifying surface-coated titanium oxide-based fine particles (α) with 1,2,3,4-butanetetracarboxylic acid.

The surface-coated titanium oxide-based fine particles (α) are obtained by subjecting titanium oxide-based fine particles (β) to surface coating treatment with a quaternary alkoxysilane.

### (Titanium oxide-based fine particles (β))

The titanium oxide-based fine particles (β) usually contain 60% by mass or more of Ti in terms of the mass of titanium oxide (TiO₂), and further contain at least one metal element selected from the group consisting of Al, Zr, Sb, Zn, Ni, Fe, Ba, Mg, Sn, Si, and V. When the titanium oxide-based fine particles (β) have such a composition, a hard coat layer having a high refractive index can be formed.

The average particle diameter of the titanium oxide-based fine particles (β) measured by a dynamic light scattering method is usually 1 to 200 nm.

The titanium oxide-based fine particles (β) may be core-shell type fine particles including titanium oxide-based fine particles as core particles, for example, core-shell type fine particles including core particles containing titanium oxide as a main component and shell layers containing a component other than titanium oxide as a main component, or may not have shell layers.

Examples of the crystal structure of the core particle include an anatase type and a rutile type. In the case of the anatase type, the titanium oxide-based fine particles (β) preferably contain 65% by mass or more of Ti in terms of the mass of titanium oxide (TiO₂). In the case of the rutile type, the titanium oxide-based fine particles (β) preferably contain 60.0 to 75.0% by mass, more preferably 60.5 to 65.5% by mass, of Ti in terms of the mass of titanium oxide (TiO₂).

The titanium oxide-based fine particles (β) can be produced by a known method such as one described in, for example, page 2, the right column, line 1 to page 3, the right column, line 22 of Japanese Patent No. 2783417.

Examples of the inorganic oxide fine particles (β₀) include aluminum oxide-based fine particles, silicon oxide-based fine particles, and zirconium oxide-based fine particles in addition to the titanium oxide-based fine particles (β).

The aluminum oxide-based fine particles usually contain 60% by mass or more, preferably 65% by mass or more, of Al in terms of the mass of aluminum oxide (Al₂O₃), and may further contain at least one metal element selected from the group consisting of Ti, Zr, Sb, Zn, Ni, Fe, Ba, Mg, Sn, Si, and V.

The silicon oxide-based fine particles usually contain 60% by mass or more, preferably 65% by mass or more, of Si in terms of the mass of silicon oxide (SiO₂), and may further contain at least one metal element selected from the group consisting of Al, Ti, Zr, Sb, Zn, Ni, Fe, Ba, Mg, Sn, and V.

The zirconium oxide-based fine particles usually contain 60% by mass or more, preferably 65% by mass or more, of Zr in terms of the mass of zirconium oxide (ZrO₂), and may further contain at least one metal element selected from the group consisting of Al, Ti, Sb, Zn, Ni, Fe, Ba, Mg, Sn, Si, and V.

### (Surface-coated titanium oxide-based fine particles (α) - surface coating treatment of titanium oxide-based fine particles (β) with quaternary alkoxysilane)

The surface-coated titanium oxide-based fine particles (α) are obtained by subjecting the surfaces of the titanium oxide-based fine particles (β) to surface coating treatment with a quaternary alkoxysilane. When the surfaces of the titanium oxide-based fine particles (β) are coating-treated with a quaternary alkoxysilane, the dispersion state of the modified titanium oxide-based fine particles (A) in a paint composition produced by the present invention containing a solvent (D) described later is stabilized for a long period of time.

On the other hand, if a tertiary or lower alkoxysilane is used instead of a quaternary alkoxysilane, the number of sites of the tertiary or lower alkoxysilane, the sites reacting with a hydrolysate (B) of an organosilicon compound having an epoxy group described later, is smaller than that of the quaternary alkoxysilane, and therefore the hardness of a hard coat coating film formed from the resulting paint composition is reduced.

As the quaternary alkoxysilane used for the surface coating treatment mentioned above, a known silane coupling agent having a hydrolyzable alkoxy group can be used, and the type thereof is selected according to, for example, the type of the solvent as appropriate. For these, one may be used singly, or two or more may be used in combination.

Typical examples of the quaternary alkoxysilane include tetraalkoxysilanes such as tetramethoxysilane and tetraethoxysilane.

For the surface coating treatment, a procedure in which a quaternary alkoxysilane is mixed with the titanium oxide-based fine particles (β) and then the alkoxy groups of the quaternary alkoxysilane are hydrolyzed may be employed, or a procedure in which the alkoxy groups of a quaternary alkoxysilane are partially hydrolyzed or hydrolyzed and then the resulting product is mixed with the titanium oxide-based fine particles (β), and as necessary, the alkoxy groups of the quaternary alkoxysilane are further hydrolyzed may be employed.

At the stage where the operation of the surface coating treatment ends, the situation is preferably that the alkoxy groups have been reacted with hydroxy groups present on the surfaces of the titanium oxide-based fine particles (β), but some alkoxy groups may remain unreacted. When performing the surface treatment, it is desirable to use, as the titanium oxide-based fine particles (β), titanium oxide-based fine particles (β) having hydroxy groups on the surfaces.

The surfaces of the titanium oxide-based fine particles (β) may be coated with a quaternary alkoxysilane by, for example, a procedure where the quaternary alkoxysilane is mixed with an alcohol aqueous solution in which the titanium oxide-based fine particles (β) are dispersed, a catalyst is added as necessary, and then the mixture is allowed to stand at normal temperature for a predetermined period of time or is heating-treated under a predetermined temperature condition.

Further, the surfaces of the titanium oxide-based fine particles (β) may be modified by adding an alcohol aqueous solution in which the titanium oxide-based fine particles (β) are dispersed in an alcohol aqueous solution containing partial hydrolysates and/or hydrolysates of a quaternary alkoxysilane and performing heating treatment.

The addition amount of the quaternary alkoxysilane in the surface coating treatment is preferably 1 to 30 parts by mass and more preferably 2 to 20 parts by mass with respect to 100 parts by mass of the titanium oxide-based fine particles (β). When the addition amount is in the above range, surface coating treatment can be performed while a reduction in the refractive index of the titanium oxide-based fine particles subjected to surface coating treatment is prevented or reduced.

Examples of commercially available products of the surface-coated titanium oxide-based fine particles (α) include OPTOLAKE 1120Z (8RX-7·A15) (trade name: Tetraethoxysilane-treated titania sol (a methanol dispersion having a solid content amount of 20% by mass) manufactured by JGC Catalysts and Chemicals Ltd.) and OPTOLAKE F-2 (A-8) (trade name: Tetraethoxysilane-treated titania sol (a methanol dispersion having a solid content amount of 30% by mass) manufactured by JGC Catalysts and Chemicals Ltd.).

### (Modified titanium oxide-based fine particles (A) - surface modification treatment of surface-coated titanium oxide-based fine particles (α) with 1,2,3,4-butanetetracarboxylic acid)

It has been found that, by causing the surface-coated titanium oxide-based fine particles (α) (that is, titanium oxide-based fine particles (β) treated with a quaternary alkoxysilane) and 1,2,3,4-butanetetracarboxylic acid to act on each other to form modified titanium oxide-based fine particles (A) in which unhydrolyzed alkoxy residues of the quaternary alkoxysilane have been converted into hydroxy groups, a hard coat layer having hardness substantially equal to existing ones can be obtained even when the time of thermal curing when forming a hard coat layer is short; this may be because, in the process of making a film of a composition produced by the method of the present invention, 1,2,3,4-butanetetracarboxylic acid, which acts also as a hydrolysis condensation catalyst of a binder component (an organosilicon compound), presumably acts as a hydrolysis condensation catalyst also on a coating formed from the quaternary alkoxysilane and during subsequent film formation, bonding and integration of the modified titanium oxide-based fine particles (A) and the binder component (an organosilicon compound) presumably progress strongly.

Further, it is presumed that, since curing progresses easily, the time required for curing of a hard coat coating film can be shortened.

The addition amount of 1,2,3,4-butanetetracarboxylic acid is 8 to 25 parts by mass, preferably 9 to 23 parts by mass, with respect to 100 parts by mass of the surface-coated titanium oxide-based fine particles (α). When the addition amount is the lower limit value or more, a hard coat layer excellent in scratch resistance and having sufficient hardness can be formed. When the addition amount is the upper limit value or less, a hard coat layer excellent in adhesion to a plastic substrate can be formed.

The modified titanium oxide-based fine particles (A) are used in an amount of preferably 10 to 70% by mass, more preferably 15 to 60% by mass, with respect to 100% by mass of the solid content of the composition produced by the method of the present invention (it is assumed that the hydrolyzed groups of an organosilicon compound (B) described later are completely condensed).

When the amount is the lower limit value or more, a hard coat layer excellent in scratch resistance and having a high refractive index can be formed. When the amount is the upper limit value or less, a hard coat layer less likely to experience cracking and having high adhesion to a plastic lens substrate can be formed.

### <Step (2)>

Step (2) is a step of hydrolyzing an organosilicon compound (B) having an epoxy group (hereinafter, also referred to as simply "organosilicon compound (B)") at 5 to 15°C to obtain a solution B containing hydrolysates of the organosilicon compound (B).

### (B) Organosilicon compound having epoxy group:

Examples of the organosilicon compound (B) having an epoxy group include a compound represented by Formula (I) below, which has an alkoxy group as a hydrolyzable group.

R¹ₐR²_{b}Si(OR³)_{4-(a+b)} (I)

In Formula (I), R¹ is an organic group having 8 or less carbon atoms and containing an epoxy group, R² is an alkyl group having 1 to 3 carbon atoms, a cycloalkyl group having 3 carbon atoms, a halogenated alkyl group having 1 to 3 carbon atoms, or an allyl group, and R³ is an alkyl group having 1 to 4 carbon atoms or a cycloalkyl group having 3 to 4 carbon atoms.

a is 0 or 1, and b is 0, 1, or 2.

Examples of the organosilicon compound having an epoxy group represented by Formula (I) above (hereinafter, also referred to as "organosilicon compound (b)") include alkoxysilane compounds as typical examples, and specific examples include α-glycidoxymethyltrimethoxysilane, α-glycidoxyethyltrimethoxysilane, β-glycidoxyethyltrimethoxysilane, γ-glycidoxypropyltrimethoxysilane, γ-glycidoxypropyltriethoxysilane, γ-glycidoxypropylmethyldimethoxysilane, γ-glycidoxypropylmethyldiethoxysilane, β-(3,4-epoxycyclohexyl)-ethyltrimethoxysilane, and β-(3,4-epoxycyclohexyl)-ethyltriethoxysilane. Among these, γ-glycidoxypropyltrimethoxysilane, γ-glycidoxypropylmethyldiethoxysilane, and β-(3,4-epoxycyclohexyl)-ethyltrimethoxysilane are preferable. For these organosilicon compounds (b), one may be used singly, or two or more may be used in combination. Some of the alkoxy groups of the organosilicon compound (b) may be hydrolyzed to the extent that the effect of the present invention is not impaired.

The organosilicon compound (B) having an epoxy group is used in an amount of preferably 20 to 70 wt%, more preferably 30 to 60% by mass, with respect to 100% by mass of the solid content of the composition produced by the method of the present invention (it is assumed that the hydrolyzable groups of the organosilicon compound (B) having an epoxy group are completely condensed).

When the amount is the lower limit value or more, a hard coat layer excellent in adhesion to materials such as a plastic lens substrate can be formed, and when the amount is the upper limit value or less, a hard coat layer excellent in scratch resistance and having a high refractive index can be formed.

### Hydrolysis:

In step (2), hydrolysis is performed under the following conditions.

The organosilicon compound (B) having an epoxy group is optionally diluted with, for example, alcohol, and then optionally diluted hydrochloric acid water is added and mixed. The mixed components are preferably stirred at 20 to 30°C for 0.5 to 2 hours and then at 5 to 15°C for 24 to 72 hours. By performing stirring under such conditions, condensation of hydrolysates of the organosilicon compound (B) having an epoxy group is prevented or reduced.

The number-average molecular weight (Mn) of hydrolysates (including condensates thereof) of the organosilicon compound (B) having an epoxy group obtained by step (2), measured by a method employed in Examples described later, is usually 80 to 500, preferably 90 to 450.

### <Step (3)>

Step (3) is a step of mixing the solution A, the solution B, a curing agent, and optionally an additive. By performing step (3), a paint composition for forming a hard coat layer is obtained.

Details of components such as the curing agent are as follows.

### (C) Curing agent:

Examples of the curing agent (C) include a cyanamide derivative compound, and at least one selected from the group consisting of a polycarboxylic acid and a polycarboxylic anhydride (hereinafter, also referred to as "polycarboxylic acid compounds").

### (Polycarboxylic acid compounds)

Examples of the polycarboxylic acid include organic carboxylic acids such as adipic acid, itaconic acid, malic acid, 1,2,3,4-butanetetracarboxylic acid, trimellitic anhydride, pyromellitic anhydride, and hexahydrophthalic anhydride;
acetylacetone metal chelate compounds represented by the general formula: M(CH₂COCH₂COCH₃)ₙ, wherein M is a metal element, and n is a valence of the metal element M, such as iron(III) acetylacetonate;
metal alkoxides such as titanium alkoxides and zirconium alkoxides;
alkali metal organic carboxylates such as sodium acetate and potassium acetate; and
perchloric acid compounds such as lithium perchlorate and magnesium perchlorate.

Among these, from the viewpoint of adhesion between the hard coat layer and the plastic substrate, the organic carboxylic acid and the acetylacetone metal chelate compound represented by the general formula: M(CH₂COCH₂COCH₃)ₙ are preferable, and adipic acid, itaconic acid, and iron(III) acetylacetonate are particularly preferable. For these, one may be used singly, or two or more may be used in combination.

### (Cyanamide derivative compound)

Examples include guanidine, guanidine organic acids, guanidine inorganic acid salts, alkylguanidines, aminoguanidine, and dicyandiamide. Examples of the guanidine organic acid include guanidine acetic acid and guanidine propionic acid, examples of the guanidine inorganic acid salt include guanidine hydrochloride, guanidine nitrate, and guanidine phosphate, and examples of the alkylguanidine include n-dodecylguanidine. Among these, for example, guanidine organic acids, guanidine inorganic acid salts, and dicyandiamide are preferable.

Components derived from the polycarboxylic acid compounds are used in an amount of preferably 0.5 to 30 parts by mass, more preferably 1 to 20 parts by mass, with respect to 100 parts by mass of the organosilicon compound (B).

When the amount is the lower limit value or more, a hard coat layer having sufficient hardness can be formed. When the amount is the upper limit value or less, the storage stability of the composition produced by the present invention is good.

Components derived from the curing agent (C) are used in an amount of preferably 0.1 to 20 parts by mass, more preferably 0.2 to 10 parts by mass, with respect to 100 parts by mass of the organosilicon compound (B). The total amount of the polycarboxylic acid compounds and the cyanamide derivative compound does not exceed the content amount of the polycarboxylic acid compounds described above.

### (D) Solvent:

A solvent (D) is a liquid for dissolving or dispersing each component described above and an optional additive described later. By containing the solvent (D), the composition produced by the present invention has high fluidity, and can be easily applied onto a substrate.

Examples of the solvent (D) include water such as distilled water or pure water; alcohols such as methanol, ethanol, and propanol; ketones such as methyl ethyl ketone and diacetone alcohol; esters such as ethyl acetate and butyl acetate; and cellosolves such as ethyl cellosolve and butyl cellosolve. Among these, lower alcohols such as methanol and water are preferable. For these solvents, one ay be used singly, or two or more may be used in combination.

The solvent (D) is used in an amount of preferably 50 to 90% by mass, more preferably 60 to 80% by mass, with respect to 100% by mass of the composition produced by the present invention.

### Optional additive:

Examples of the optional additive include a leveling agent, an ultraviolet absorber, and a light stabilizer.

Examples of the leveling agent include surfactants, and more specific examples include silicone-based surfactants such as polyoxyalkylene dimethylpolysiloxane and fluorine-based surfactants such as perfluoroalkyl carboxylates and perfluoroalkyl ethylene oxide adducts; among these, silicone-based surfactants are preferable.

Examples of the ultraviolet absorber include benzophenone-based ultraviolet absorbers and benzotriazole-based ultraviolet absorbers.

Examples of the light stabilizer include hindered amine-based light stabilizers.

### Mixing of components:

The mixing of the components is performed preferably at 5 to 20°C, more preferably at 10 to 15°C.

In step (3), preferably, the solution A and the solution B are first mixed, and then a curing agent and an optional additive are mixed therein. When mixing the solution A and the solution B, preferably the solution A is mixed with the solution B little by little.

The mixed components are preferably stirred at 20 to 30°C for 0.5 to 2 hours and then at 5 to 15°C for 24 to 72 hours. By performing stirring under such conditions, the reaction of the mixed substances is prevented or reduced.

### [Method for producing substrate with hard coat layer]

A method for producing a substrate with a hard coat layer of the present invention includes:
(I) a step of producing a paint composition for forming a hard coat layer by the production method described above;
(II) a step of applying the paint composition for forming a hard coat layer obtained in step (I) to a plastic substrate (that is, a surface of a plastic substrate) to form a coating film; and
(III) a step of heating the coating film to cure.

Step (I) may be replaced with a step of preparing the paint composition for forming a hard coat layer of the present invention described above.

In step (II), as a method for applying the paint composition for forming a hard coat layer to a plastic substrate, a known method such as a dipping method or a spin coating method can be used. Examples of the plastic substrate include a plastic substrate formed of, for example, a polycarbonate resin, a polyamide resin, a PMMA resin, an allyl resin, a polythiourethane resin, or a polythioepoxy resin.

In step (III), the coating film formed in step (II) is thermally cured to form a hard coat layer on the plastic substrate.

According to the present invention, this thermal curing (main curing) can be performed under the following conditions.
Temperature: preferably 80 to 130°C, more preferably 100 to 120°C
Time: preferably 20 to 60 minutes, more preferably 20 to 40 minutes

In the thermal curing, preliminary curing at usually 80 to 100°C for usually 10 to 15 minutes and subsequent main curing under the above conditions and at a higher temperature than in the preliminary curing may be performed. When the thermal curing is performed stepwise in this way, rapid curing shrinkage of the coating film is alleviated, and cracking of the coating film and deformation of the plastic substrate are prevented or reduced.

By using, as a paint composition for forming a hard coat layer, the paint composition for forming a hard coat layer of the present invention or a paint composition for forming a hard coat layer produced by the production method of the present invention, the time required for thermal curing can be made shorter than in the conventional technology and furthermore the heating temperature can be lowered without impairing the quality of the resulting hard coat layer (for example, adhesion to a substrate), and thus the productivity of the hard coat layer can be improved.

The film thickness of the cured coating film, that is, the hard coat layer is preferably 1.0 to 5.0 um, more preferably 1.5 to 3.5 um.

In this way, a hard coat layer having a refractive index in the range of 1.52 or more, more specifically, 1.57 to 1.75 can be formed.

In the substrate with a hard coat layer, an antireflection film may be formed on a surface of the hard coat layer on the opposite side to the plastic substrate side, or a primer layer may be formed between the plastic lens substrate and the hard coat layer, depending on the intended use. As the antireflection film and the primer layer, known ones can be used.

### Examples

The present invention will now be specifically described using Examples, but the present invention is not limited to these Examples at all.

### [Method for measuring number-average molecular weight of hydrolysates of silane compound and condensates of hydrolysates]

In embodiments such as Examples, the number-average molecular weight of hydrolysates of a silane compound and condensates of the hydrolysates was measured by the following method.

A solution containing hydrolysates and tetrahydrofuran (manufactured by Kanto Chemical Co., Inc.) were mixed to prepare a sample having a solid content concentration of 3.0% by mass. 0.1 ml of the sample was collected using a microsyringe and was put into a column (each of TSK-GEL G3000HLL and TSK-GEL G2500HXL manufactured by Tosoh Corporation), and the number-average molecular weight (Mn) in terms of polystyrene of the solid content (the hydrolysates of the silane compound and/or condensates of the hydrolysates) in the solution was measured using gel permeation chromatography (HLC-8120GPC, manufactured by Tosoh Corporation).

### [Source materials]

In Examples and Comparative Examples, the following source materials were used, for example.
· γ-Glycidoxypropyltrimethoxysilane: SILQUEST A-187J (trade name, manufactured by Momentive Performance Materials)
· Silicone-based surfactant: DOWSIL L-7001 (trade name, manufactured by The Dow Chemical Company)
· Tetraethoxysilane-treated titania sol (a methanol dispersion having a solid content amount of 20% by mass): OPTOLAKE 1120Z (8RX-7·A15) (trade name, manufactured by JGC Catalysts and Chemicals Ltd.)
· γ-Glycidoxypropyltrimethoxysilane-treated titania sol (a methanol dispersion having a solid content amount of 20% by mass): OPTOLAKE 1120Z (8RX-25·G) (trade name, manufactured by JGC Catalysts and Chemicals Ltd.)

### [Example 1]

### (Production of paint composition)

7 g of 1,2,3,4-butanetetracarboxylic acid was added to 334 g of tetraethoxysilane-treated titania sol at room temperature (20 to 30°C, the same applies hereinafter), and this solution was stirred at room temperature one whole day and night to obtain a titania sol preparation solution (A1).

12 g of methanol was added to 83 g of γ-glycidoxypropyltrimethoxysilane while stirring was performed, and then 24 g of a 0.01 N hydrochloric acid aqueous solution was dropped. The resulting solution was stirred at room temperature for 1 hour and then stirred at 10°C for 48 hours to hydrolyze the silane compound, and a solution (B1) containing hydrolysates of the silane compound was obtained. A solution for measuring the number-average molecular weight of hydrolysates of the silane compound and/or condensates of the hydrolysates was prepared by a similar method. The number-average molecular weight was in the range of 80 to 500.

While the solution (B1) was stirred at 10°C, the total amount of the titania sol preparation solution (A1) was added to the solution (B1) little by little, and then 25 g of propylene glycol monomethyl ether, 5 g of dicyandiamide, and 1 g of a silicone-based surfactant as a leveling agent were added thereto. The resulting solution was stirred at room temperature for 1 hour and then stirred at 10°C for 48 hours to obtain a paint composition (P1) for forming a hard coat layer.

### (Production of substrate with hard coat layer)

A lens (trade name: 150UC, manufactured by Shanghai Conant Optics Co., Ltd.) made of CR-39 (allyl diglycol carbonate) was immersed in an 8% NaOH aqueous solution for 10 minutes to perform etching treatment.

The paint composition (P1) for forming a hard coat layer was applied to a surface of the lens subjected to etching treatment by a dipping method (pulling speed: 230 mm/min) .

The lens coated with the paint composition was heated at 100°C for 10 minutes to perform preliminary curing of the coating film, and was then heated at 120°C for 30 minutes to perform main curing; thus, a substrate (H1a) with a hard coat layer was obtained.

Further, the substrate was changed to a thiourethane lens (trade name: MR-7, manufactured by Mitsui Chemicals, Inc., refractive index: 1.67), and a similar operation to the above was performed to obtain a substrate (H1b) with a hard coat layer.

### [Example 1a]

A substrate with a hard coat layer was obtained in a similar manner to Example 1 except that the heating temperature was changed to 100°C in the main curing.

### [Example 1b]

A substrate with a hard coat layer was obtained in a similar manner to Example 1 except that the heating temperature was changed to 110°C in the main curing.

### [Example 2]

### (Production of paint composition)

A paint composition (P2) for forming a hard coat layer was obtained in a similar manner to Example 1 except that the addition amount of 1,2,3,4-butanetetracarboxylic acid was changed to 14 g.

### (Production of substrate with hard coat layer)

Two types of substrate with a hard coat layer were obtained in a similar manner to Example 1 except that the paint composition (P1) for forming a hard coat layer was changed to the paint composition (P2) for forming a hard coat layer.

### [Example 2a]

A substrate with a hard coat layer was obtained in a similar manner to Example 2 except that the heating temperature was changed to 100°C in the main curing.

### [Example 2b]

A substrate with a hard coat layer was obtained in a similar manner to Example 2 except that the heating temperature was changed to 110°C in the main curing.

### [Comparative Example 1]

### (Production of paint composition)

12 g of methanol was added to 83 g of γ-glycidoxypropyltrimethoxysilane while stirring was performed, and then 24 g of a 0.01 N hydrochloric acid aqueous solution was dropped. The resulting solution was stirred at room temperature one whole day and night to obtain a solution (b1) containing hydrolysates of the silane compound. A solution for measuring the number-average molecular weight of hydrolysates and condensates of the silane compound was prepared by a similar method. The number-average molecular weight was outside the range of 80 to 500.

Next, 334 g of tetraethoxysilane-treated titania sol, 25 g of propylene glycol monomethyl ether, 66 g of methanol, 7 g of itaconic acid, 5 g of dicyandiamide, and 1 g of a silicone-based surfactant as a leveling agent were added to the solution (b1). The resulting solution was stirred at room temperature one whole day and night to obtain a paint composition (p1) for forming a hard coat film.

### (Production of substrate with hard coat layer)

Two types of substrate with a hard coat layer were obtained in a similar manner to Example 1 except that the paint composition (P1) for forming a hard coat layer was changed to the paint composition (p1) for forming a hard coat layer.

### [Reference Example 1]

A substrate with a hard coat layer was obtained in a similar manner to Comparative Example 1 except that the heating time was changed to 120 minutes in the main curing.

### [Comparative Example 2]

### (Production of paint composition)

A paint composition (p2) for forming a hard coat film was obtained in a similar manner to Comparative Example 1 except that 7 g of itaconic acid was changed to 7 g of 1,2,3,4-butanetetracarboxylic acid.

### (Production of substrate with hard coat layer)

Two types of substrate with a hard coat layer were obtained in a similar manner to Example 1 except that the paint composition (P1) for forming a hard coat layer was changed to the paint composition (p2) for forming a hard coat layer.

### [Comparative Example 3]

### (Production of paint composition)

A paint composition (p3) for forming a hard coat layer was obtained in a similar manner to Example 1 except that the addition amount of 1,2,3,4-butanetetracarboxylic acid was changed to 5 g.

### (Production of substrate with hard coat layer)

Two types of substrate with a hard coat layer were obtained in a similar manner to Example 1 except that the paint composition (P1) for forming a hard coat layer was changed to the paint composition (p3) for forming a hard coat layer.

### [Comparative Example 4]

### (Production of paint composition)

A paint composition (p4) for forming a hard coat layer was obtained in a similar manner to Example 1 except that the addition amount of 1,2,3,4-butanetetracarboxylic acid was changed to 18 g.

### (Production of substrate with hard coat layer)

Two types of substrate with a hard coat layer were obtained in a similar manner to Example 1 except that the paint composition (P1) for forming a hard coat layer was changed to the paint composition (p4) for forming a hard coat layer.

### [Comparative Example 5]

### (Production of paint composition)

12 g of methanol was added to 83 g of γ-glycidoxypropyltrimethoxysilane while stirring was performed, and then 24 g of a 0.01 N hydrochloric acid aqueous solution was dropped. The resulting solution was stirred at room temperature one whole day and night to hydrolyze the silane compound, and a solution (b5) containing hydrolysates of the silane compound was obtained. A solution for measuring the number-average molecular weight of hydrolysates and condensates of the silane compound was prepared by a similar method. The number-average molecular weight was outside the range of 80 to 500.

A paint composition (p5) for forming a hard coat layer was obtained in a similar manner to Example 1 except that the solution (B1) was changed to the solution (b5).

### (Production of substrate with hard coat layer)

Two types of substrate with a hard coat layer were obtained in a similar manner to Example 1 except that the paint composition (P1) for forming a hard coat layer was changed to the paint composition (p5) for forming a hard coat layer.

### [Comparative Example 6]

### (Production of paint composition)

A paint composition (p6) for forming a hard coat layer was obtained in a similar manner to Example 1 except that 334 g of tetraethoxysilane-treated titania sol was changed to 334 g of γ-glycidoxypropyltrimethoxysilane-treated titania sol.

### (Production of substrate with hard coat layer)

Two types of substrate with a hard coat layer were obtained in a similar manner to Example 1 except that the paint composition (P1) for forming a hard coat layer was changed to the paint composition (p6) for forming a hard coat layer.

### <Evaluation of substrate with hard coat layer>

The substrate with a hard coat layer produced in each of Examples and Comparative Examples was tested or evaluated by the following methods. The evaluation results are shown in Tables 1 and 2.

### [Dyeability test]

When a substrate with a hard coat layer is immersed in a dyeing solution, the dye passes through the hard coat layer, and the substrate is dyed. In the case where the curing of the hard coat layer is advanced, the amount of dye passing through the hard coat layer is small, and therefore the substrate is not dyed. On the other hand, in the case where the curing of the hard coat layer is insufficient, the amount of dye passing through the hard coat layer is large, and the substrate is dyed.

For the substrate with a hard coat layer produced using a lens made of CR-39, the luminous transmittance (%) of the dyed lens was measured using a luminous transmittance measuring device.

### Dyeability test conditions

1) Dye name: Optisafe Gray #C250-10 (manufactured by Phantom Research Laboratories Inc.)
   Dye concentration: 2.6 wt%
   Dispersion medium: purified water
2) Dyeing conditions: 92°C × 10 minutes
3) Luminous transmittance measuring device: a luminous transmittance checker, TLV-304 (manufactured by Asahi Spectra Co., Ltd.)

### [Other evaluations]

For the substrate with a hard coat layer produced using a thiourethane lens, the following evaluations were performed.

### (1) External appearance (cloudiness of coating film)

The haze value (%) was measured with a haze meter (NDH5000, manufactured by Nippon Denshoku Industries Co., Ltd.) .

### (2) External appearance (cracking)

Cracking was visually observed under a three-wavelength desktop fluorescent lamp.

### Determination criteria

Good: there is no cracking
Poor: there is cracking

### (3) Scratch resistance test

A surface of the cured coating film (hard coat layer) was rubbed 30 times with a load of 700 g using steel wool #0000 manufactured by Bonstar, and the number of scratches of the cured coating film was visually checked.

### (4) Adhesion test

On a surface of the cured coating film (hard coat layer), 11 vertical cuts and 11 horizontal cuts reaching the lens were made using a utility knife to produce 100 grid squares.

A cellophane tape was strongly adhered to the grid portion, and was peeled off at once in the direction of 90 degrees. This operation was performed 10 times in total, and the number of grid squares peeled off was counted.

**Table 1**

| | Example 1 | Example 2 | Comparative Example 1 | Reference Example 1 | Comparative Example 2 | Comparative Example 3 | Comparative Example 4 | Comparative Example 5 | Comparative Example 6 |
|---|---|---|---|---|---|---|---|---|---|
| Hard coat layer production conditions | | | | | | | | | |
| Polycarboxylic acid/type *1) | BTCA | BTCA | Itaconic acid | Itaconic acid | BTCA | BTCA | BTCA | BTCA | BTCA |
| Polycarboxylic acid/amount (parts by mass) *2) | 10 | 21 | 10 | 10 | 7 | 7 | 27 | 10 | 10 |
| Alkoxysilane for titanium oxide fine particle surface treatment *3) | TEOS | TEOS | TEOS | TEOS | TEOS | TEOS | TEOS | TEOS | γ-GTS |
| Surface treatment with BTCA | Performed | Performed | Not performed | Not performed | Not performed | Performed | Performed | Performed | Performed |
| Organosilicon compound hydrolysis temperature | 10°C | 10°C | Room temperature | Room temperature | Room temperature | 10°C | 10°C | Room temperature | 10°C |
| Curing temperature (°C) | 120 | 120 | 120 | 120 | 120 | 120 | 120 | 120 | 120 |
| Curing time (min) | 30 | 30 | 30 | 120 | 30 | 30 | 30 | 30 | 30 |
| Hard coat layer properties | | | | | | | | | |
| Film refractive index | 1.67 | 1.67 | 1.67 | 1.67 | 1.67 | 1.67 | 1.67 | 1.67 | 1.67 |
| Film thickness | 2.8 | 2.8 | 2.6 | 2.6 | 2.6 | 2.6 | 2.7 | 2.6 | 2.6 |
| Dyeability/luminous transmittance (%) | 14.2 | 6.7 | 39.7 | 23.0 | 26.0 | 28.3 | 3.0 | 24.5 | 33.7 |
| External appearance (cloudiness of coating film)/haze value (%) | 0.2 | 0.2 | 15 | 0.2 | 0.2 | 0.2 | 0.9 | 0.2 | 0.2 |
| External appearance (cracking) | Good | Good | Good | Good | Good | Good | Poor | Good | Good |
| Scratch resistance/number of scratches | 0 | 0 | 15 | 0 | 2 | 4 | 0 | 2 | 4 |
| Adhesion/number of grid squares peeled off | 0 | 0 | 0 | 0 | 0 | 0 | 7 | 0 | 0 |

| | | | | | | | | | |
|---|---|---|---|---|---|---|---|---|---|
| *1) BTCA: 1,2,3,4-butanetetracarboxylic acid *2) It is assumed that the amount of titanium oxide fine particles surface-treated with the alkoxysilane is 100 parts by mass. *3) TEOS: tetraethoxysilane, γ-GTS: γ-glycidoxypropyltrimethoxysilane | | | | | | | | | |

**Table 2**

| | | Example 1a | Example 1b | Example 1 | Example 2a | Example 2b | Example 2 |
|---|---|---|---|---|---|---|---|
| Hard coat layer production conditions | | | | | | | |
| | BTCA/amount (parts by mass) *1) *2) | 10 | 10 | 10 | 21 | 21 | 21 |
| | Curing temperature (°C) | 100 | 110 | 120 | 100 | 110 | 120 |
| | Curing time (min) | 30 | 30 | 30 | 30 | 30 | 30 |
| Hard coat layer properties | | | | | | | |
| | Film refractive index | 1.67 | 1.67 | 1.67 | 1.67 | 1.67 | 1.67 |
| | Film thickness | 2.6 | 2.7 | 2.8 | 2.6 | 2.7 | 2.8 |
| | Dyeability/luminous transmittance (%) | 24.8 | 20.0 | 14.2 | 18.5 | 12.4 | 6.7 |
| | External appearance (cloudiness of coating film)/haze value (%) | 0.2 | 0.2 | 0.2 | 0.2 | 0.2 | 0.2 |
| | External appearance (cracking) | Good | Good | Good | Good | Good | Good |
| | Scratch resistance/number of scratches | 0 | 0 | 0 | 0 | 0 | 0 |
| | Adhesion/number of grid squares peeled off | 0 | 0 | 0 | 0 | 0 | 0 |

| | | | | | | | |
|---|---|---|---|---|---|---|---|
| *1) BTCA: 1,2,3,4-butanetetracarboxylic acid *2) It is assumed that the amount of titanium oxide fine particles surface-treated with the alkoxysilane is 100 parts by mass. | | | | | | | |

## Claims

1. A paint composition for forming a hard coat layer, the paint composition comprising:
surface-coated inorganic oxide fine particles (α₀) that are inorganic oxide fine particles (β₀) being selected from the group consisting of aluminum oxide-based fine particles, silicon oxide-based fine particles, titanium oxide-based fine particles (β), and zirconium oxide-based fine particles and having been subjected to surface coating treatment with a quaternary alkoxysilane;
hydrolysates of an organosilicon compound having an epoxy group and/or condensates of the hydrolysates;
1,2,3,4-butanetetracarboxylic acid; and
a curing agent,
the hydrolysates and/or condensates of the hydrolysates having a number-average molecular weight of 80 to 500, and
the composition having a content amount of 1,2,3,4-butanetetracarboxylic acid of 8 to 25 parts by mass with respect to 100 parts by mass of the surface-coated inorganic oxide fine particles (α₀).

2. The paint composition for forming a hard coat layer according to claim 1, wherein the inorganic oxide fine particles (β₀) and the surface-coated inorganic oxide fine particles (α₀) are the titanium oxide-based fine particles (β) and surface-coated titanium oxide-based fine particles (α), respectively.

3. The paint composition for forming a hard coat layer according to claim 2, wherein the titanium oxide-based fine particles (β) contain 60% by mass or more of Ti in terms of mass of titanium oxide, and further contain at least one metal element selected from the group consisting of Al, Zr, Sb, Zn, Ni, Fe, Ba, Mg, Sn, Si, and V.

4. The paint composition for forming a hard coat layer according to claim 2, wherein the titanium oxide-based fine particles (β) are core-shell type fine particles including titanium oxide-based fine particles as core particles.

5. The paint composition for forming a hard coat layer according to claim 3, wherein the titanium oxide-based fine particles (β) are core-shell type fine particles including titanium oxide-based fine particles as core particles.

6. A method for producing a paint composition for forming a hard coat layer, the method comprising:
(1) a step of adding 1,2,3,4-butanetetracarboxylic acid to a dispersion of surface-coated inorganic oxide fine particles (α₀) that are inorganic oxide fine particles (β₀) selected from the group consisting of aluminum oxide-based fine particles, silicon oxide-based fine particles, titanium oxide-based fine particles (β), and zirconium oxide-based fine particles and having been subjected to surface coating treatment with a quaternary alkoxysilane to obtain a solution A containing modified inorganic oxide fine particles (A₀) having been further subjected to surface modification;
(2) a step of hydrolyzing an organosilicon compound having an epoxy group at 5 to 15°C to obtain a solution B containing hydrolysates; and
(3) a step of mixing the solution A, the solution B, a curing agent, and optionally an additive,
wherein the addition amount of 1,2,3,4-butanetetracarboxylic acid is 8 to 25 parts by mass with respect to 100 parts by mass of the surface-coated inorganic oxide fine particles (α₀).

7. The method for producing a paint composition for forming a hard coat layer according to claim 6, wherein the inorganic oxide fine particles (β₀), the surface-coated inorganic oxide fine particles (α₀), and the modified inorganic oxide fine particles (A₀) are the titanium oxide-based fine particles (β), surface-coated titanium oxide-based fine particles (α), and modified titanium oxide-based fine particles (A), respectively.

8. The method for producing a paint composition for forming a hard coat layer according to claim 7, wherein the titanium oxide-based fine particles (β) contain 60% by mass or more of Ti in terms of mass of titanium oxide, and further contain at least one metal element selected from the group consisting of Al, Zr, Sb, Zn, Ni, Fe, Ba, Mg, Sn, Si, and V.

9. The method for producing a paint composition for forming a hard coat layer according to claim 7, wherein the titanium oxide-based fine particles (β) are core-shell type fine particles including titanium oxide-based fine particles as core particles.

10. The method for producing a paint composition for forming a hard coat layer according to claim 8, wherein the titanium oxide-based fine particles (β) are core-shell type fine particles including titanium oxide-based fine particles as core particles.

11. A method for producing a substrate with a hard coat layer, the method comprising:
(I) a step of preparing the paint composition for forming a hard coat layer according to any one of claims 1 to 5;
(II) a step of applying the paint composition for forming a hard coat layer to a surface of a plastic substrate to form a coating film; and
(III) a step of thermally curing the coating film.

12. A method for producing a substrate with a hard coat layer, the method comprising:
(I) a step of producing a paint composition for forming a hard coat layer by the method according to any one of claims 6 to 10;
(II) a step of applying the paint composition for forming a hard coat layer to a surface of a plastic substrate to form a coating film; and
(III) a step of thermally curing the coating film.

13. A substrate with a hard coat layer, the substrate comprising: a plastic substrate; and a hard coat layer formed on a surface of the plastic substrate, wherein the hard coat layer is a thermally cured product of the paint composition for forming a hard coat layer according to any one of claims 1 to 5.
